Europäisches Patentamt

European Patent Office

Office européen des brevets

(11) Publication number: **0 504 998 A2**

# EUROPEAN PATENT APPLICATION

(21) Application number: **92200738.0**

(22) Date of filing: **16.03.92**

(51) Int. Cl.5: **H04N 1/028**

(30) Priority: **22.03.91 EP 91200640**

(43) Date of publication of application:
**23.09.92 Bulletin 92/39**

(84) Designated Contracting States:
**DE FR GB**

(71) Applicant: **N.V. Philips' Gloeilampenfabrieken**
**Groenewoudseweg 1**
**NL-5621 BA Eindhoven(NL)**

(72) Inventor: **Beirens, Leopold Cyrille Maria**
**c/o INT. OCTROOIBUREAU B.V. Prof.**
**Holstlaan 6**
**NL-5656 AA Eindhoven(NL)**
Inventor: **de Bie, Johannes Henricus**
**c/o INT. OCTROOIBUREAU B.V. Prof.**
**Holstlaan 6**
**NL-5656 AA Eindhoven(NL)**

(74) Representative: **Zwaan, Andries Willem et al**
**INTERNATIONAAL OCTROOIBUREAU B.V.**
**Prof. Holstlaan 6**
**NL-5656 AA Eindhoven(NL)**

(54) **Device for the optical scanning of a document.**

(57) The device (1) comprises an elongate scanning block (5), at least one light source (9, 67) for illuminating the document (3), and an optical detection system (11) comprising at least one sensor (13). The device (1) furthermore comprises a first optical fibre bundle (17) and a second optical fibre bundle (19). Each of the bundles (17), (19) consists of a number of optical fibres (21), (27). The first ends (23) of the fibres (21) of the first fibre bundle (17) and the first ends (29) of the fibres (27) of the second fibre bundle (19) are arranged in a first row (35) and in a second row (39), respectively, in a side face (41) of the scanning block (5) which faces the document. The rows (35), (39) extend in the longitudinal direction of the scanning block (5), the first ends (23), (29) of the two bundles (17), (19) being directed towards the document (3). The optical fibres (21), (27) emerge from the scanning block (5) *via* at least one end face (43) of the scanning block (5).

FIG. 7

The invention relates to a device for the optical scanning of a document, comprising an elongate scanning block, at least one light source for illuminating the document, an optical detection system which includes at least one sensor, a first optical fibre bundle and a second optical fibre bundle, each fibre bundle comprising a number of optical fibres having a core, a first end and a second end, the first ends of the fibres in a respective fibre bundle being arranged in a first row in a first end face, their second ends being arranged in a second end face, the first end faces being coincident with a side face of the scanning block which is to face the document, the rows thus formed in the first end faces extending in the longitudinal direction of the scanning block.

A device of this kind is known from the Abstract in English of JP-A 56-120259 and can be used, for example as a scanning unit in document scanners for facsimily applications. The device described in the cited Abstract utilizes two fibre bundles, the first fibre ends of which are arranged in a row and are mounted in a scanning block. The fibres emerge from the scanning block *via* a side face which is oriented away from the document and can be arranged so that their second fibre ends face a light source or a sensor. A drawback of such a device consists in that on the one hand a comparatively long optical path per pixel is required for reduced imaging of a line to be scanned when the use of a small sensor is desired. This requires a long fibre length, having an adverse effect on the cost price of the device. On the other hand, the optical path can remain comparatively short when use is made of a sensor having a length equal to that of the line to be scanned. However, such a sensor is comparatively expensive.

It is an object of the invention to provide a device of the kind set forth which has a compact construction and a comparatively low cost price.

To achieve this, the device in accordance with the invention is characterized in that the optical fibre bundles emerge from the scanning block *via* at least one end face of the scanning block. This offers the advantage that, even though use can be made of a small sensor which is comparatively inexpensive, the optical path per pixel is substantially reduced, so that the required fibre length is shorter and the construction of the device may be compact.

A special embodiment of the device in accordance with the invention is characterized in that the two rows of first fibre ends extend substantially parallel to one another. When the two rows of fibre ends are made to extend substantially in parallel rather than in an interleaved fashion, the number of fibre ends that can be secured within the same surface area of the scanning block is greater if the distance between two fibres is smaller than the fibre diameter, resulting in enhanced resolution of the device.

A further embodiment of the device in accordance with the invention is characterized in that the first fibre ends are arranged in a dense packing. By arranging as many fibres as possible on an as small as possible surface, an as high as possible resolution is achieved. This step also enhances the compactness of the device.

A further embodiment of the device in accordance with the invention, in which at least one of the fibre bundles is adapted to illuminate the document and at least one of the fibre bundles is adapted to read out the document, is characterized in that the first optical fibre bundle emerges from the scanning block *via* a first end face, the second optical fibre bundle emerging from the scanning block *via* a second end face. In addition to compactness of the device there is obtained the advantage that, if illumination takes place *via* one end face and read-out takes place *via* the other end face, the path length per pixel is substantially the same for all pixels. Moreover, there are fewer fibres per end face, so that the surface of the end faces may remain small, benefiting the compactness of the device.

Another embodiment of the device in accordance with the invention is characterized in that the light source is mounted on the second end face of the fibre bundle intended for illumination. Because the light source is mounted on the end face of the fibre bundle, the optical losses are reduced thanks to efficient coupling-in of light, so that efficient illumination can be achieved using little power. The light source may be in optical contact with the relevant end face, possibly *via* an optical liquid or glue.

A further embodiment of the device in accordance with the invention is characterized in that the light source comprises a light-emitting diode. Light-emitting diodes are particularly suitable for this purpose, *inter alia* because of their high switching speed.

A further embodiment of the device in accordance with the invention is characterized in that the sensor is mounted on and in optical contact with the second end face of the fibre bundle intended for read-out. Because of the optical contact, the optical losses are limited so that a high detection efficiency can be achieved.

A further embodiment of the device in accordance with the invention is characterized in that at least one of the fibre bundles is adapted to illuminate as well as to read out the document, the light beam from the light source for illumination being incident on the document through a transparent layer which encloses the cores of at least a part of the fibres of the relevant fibre bundle. Thus, the same fibre bundle can be used for illumination as well as for document read-out. As a result, the document is illuminated substantially at the read-out location, and, moreover, the number of bundles used for the read-out is increased, resulting in resolution enhancement.

A further embodiment of the device in accordance with the invention is characterized in that the incident light beam and the core of the fibre enclose an angle which is associated with the refractive indices of the core and the transparent material so that total reflection is absent at the area where the light beam enters the core and at the area where the light beam is incident on the document. In this embodiment it is prevented that a part of the coupled-in light is incident directly on the sensor, and that a part of the light to be detected escapes at the area where light is coupled in.

Another embodiment of the device in accordance with the invention is characterized in that a cylindrical lens is arranged in the light path between the light source and the cores at the area where the light beam enters. As a result, the incident light beam is concentrated in the transverse direction on the document to be scanned.

A further embodiment of the device in accordance with the invention is characterized in that the light source comprises a row of light-emitting diodes. Such a light source is particularly suitable for this application, *inter alia* because of the comparatively high switching speed of light-emitting diodes.

A further embodiment of the device in accordance with the invention is characterized in that the sensor is mounted on and in optical contact with the second end faces of the fibre bundles intended for read-out. Because of the optical contact of the sensor with the fibre ends, the optical losses are substantially reduced, so that a high detection efficiency can be achieved.

A further embodiment of the device in accordance with the invention is characterized in that the sensor is a CCD. Because of the use of a CCD, a comparatively large number of grey levels can be realised.

The invention will be described in detail hereinafter with reference to the drawing.

Fig. 1 shows diagrammatically a front view of a first embodiment of a device in accordance with the invention.

Fig. 2 shows diagrammatically a front view of a second embodiment of a device in accordance with the invention.

Figs. 3a and 3b show an embodiment of an arrangement of the first fibre ends in the scanning block which is suitable for use in a device in accordance with the invention.

Fig. 4 is a diagrammatic cross-sectional view of an example of the positioning of the first fibre ends in the scanning block for a device in accordance with the invention. Fig. 5 shows an embodiment of a fibre forming part of a fibre beam adapted for illumination and read-out and suitable for use in a device in accordance with the invention.

Fig. 6 shows a numerical example of a feasible geometry of the device in accordance with the invention.

Fig. 7 is a perspective view of an embodiment of a device as shown in Fig. 2.

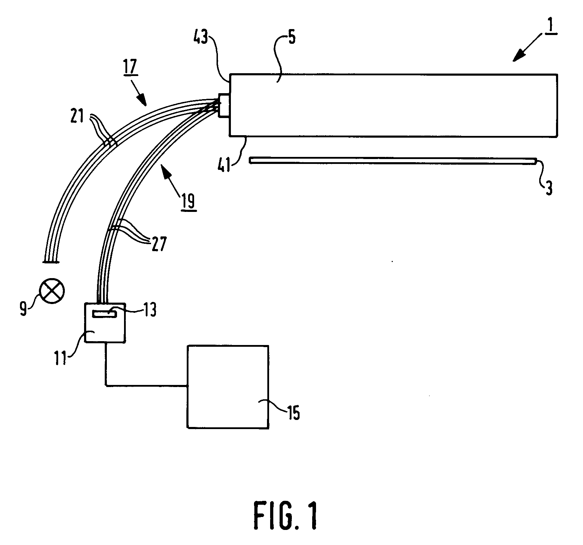

Fig. 1 shows diagrammatically a device 1 for the optical scanning of a document 3. Via a transport system (not shown) the document 3, for example a sheet of paper of A4 format, is displaced underneath an elongate scanning block 5 in a direction perpendicular to the plane of drawing. The scanning block 5 may be made of, for example aluminium or plastic. The device 1 furthermore comprises a light source 9 for illuminating the document 3 and an optical detection system 11 which comprises a sensor 13 for reading out the document 3. The detection system 11 is connected to a signal processing unit 15 in which the signals from the detection system 11 are converted into signals suitable for storage and/or transmission. The device 1 furthermore comprises a first optical fibre bundle 17 which consists of a number of optical fibres 21 and a second optical fibre bundle 19 which consists of a number of optical fibres 27. One of the bundles 17, 19 can be used, for example as an illumination bundle, whilst the other bundle can be used as a read-out bundle. In the present embodiment, the first fibre bundle 17 is used as an illumination bundle whilst the second fibre bundle 19 is used as a read-out bundle. The optical fibres 21, 27 may be made, for example of plastic and are manufactured *inter alia* by Mitsubishi Rayon (Japan) (for example, type no. CK-4 for a 93 $\mu$m fibre) and by Poly-Optical (USA) (for example, type no. PCM 1105 for a 125 $\mu$m fibre). A suitable fibre diameter is, for example 93 $\mu$m for a resolution of 200 pixels/inch. Furthermore, the fibres 17, 19 can be embedded, for example completely or over a part of their length, in a synthetic material in order to obtain rigid components. In the embodiment shown in Fig. 1 the two fibre bundles 17, 19 emerge from the scanning block 5 *via* the same end face 43.

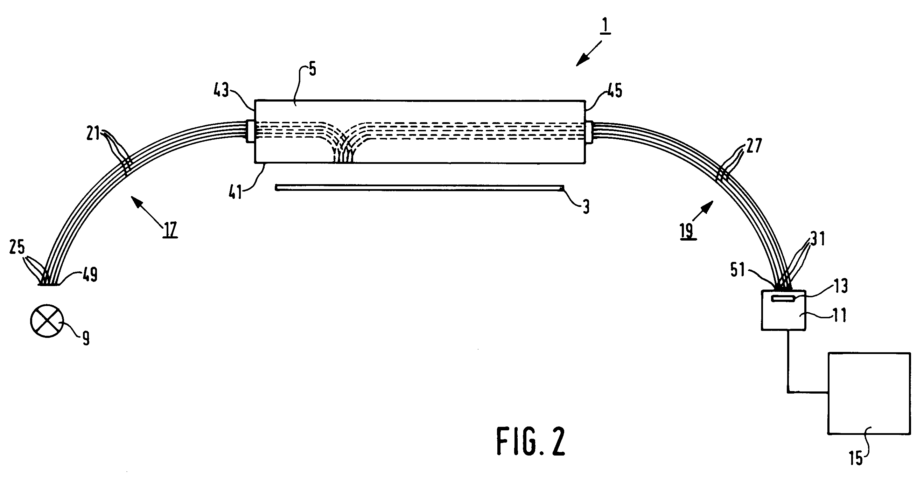

In the embodiment shown in Fig. 2 the first fibre bundle 17 emerges from the first end face 43 of the scanning block 5, whilst the second fibre bundle 19 emerges from the second end face 45 of the scanning block 5. When one beam is used for illumination and the other beam is used for detection, the total length of the light path per pixel is substantially the same for all pixels, and hence the transmission is also the same.

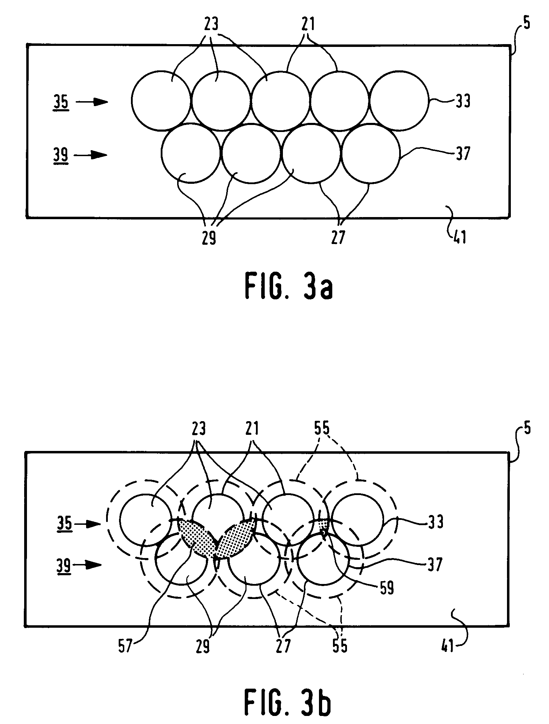

In the scanning block 5 the first ends 23 of the fibres 21 are arranged in a first row 35 in a first end face 33, the second ends 29 of the fibres 27 being arranged in a first end face 37 in a second row 39 (Fig. 3a). The two rows 35, 39 extend in the longitudinal direction of the scanning block 5. The fibre ends 23, 29 are secured in a side face 41 of the scanning block 5 which faces the document 3 in the operating condition. The first ends 23, 29 of the fibres 21, 27 then face the document 3. The end faces 33, 37 may be protected against wear, for example as is known *per se* from Netherlands Patent Application NL-8902295 (PHN 13.085). The second ends 25 of the fibres 21 open into a second end face 49 and the second ends 31 of the fibres 27 open into a second end face 51 (Fig. 2). In these two end faces 49, 51 the fibre ends 25, 31 may be arranged, for example in the form of a circle, a rectangle or another polygon. A decisive factor in this respect may be the shape of the sensors 13 used.

The two rows 35, 39 of first fibre ends 23, 29 may be interleaved as is known from the cited Abstract. This means that between two fibres 21 of the first fibre bundle 17 there is situated a fibre 27 of the second fibre bundle 19 and *vice versa*. By arranging the two rows 35, 39 so as to be substantially parallel to one another, the distance between two successive fibres of the same row being smaller than the fibre diameter in the relevant row, a higher resolution can be achieved. The maximum resolution to be achieved amounts to twice the resolution achieved according to the cited Abstract. The arrangement of the first fibre ends 23, 29 in parallel rows is known *per se*, for example from US-A 3,899,035. An even higher resolution can be achieved by arranging the two rows 35, 39 in a dense packing as shown in Fig. 3a.

When, for example the first fibre bundle 17 is used as the illumination bundle, the second end face 49 of this bundle 17 is irradiated by a light beam from the light source 9. *Via* the fibre bundle 17, this light beam is guided to the first end face 33 wherefrom it emanates so as to illuminate a line of the document 3 which is situated below the row 35 of first fibre ends 23.

When, for example the second fibre bundle 19 is then used as the read-out bundle, a part of the light dispersed on this line of the document is intercepted by the first end face 33 of the bundle 19 so as to be guided to the second end face 51 whereto the detection system 11 is connected.

A light-emitting diode is particularly suitable for use as a light source 9. This is because LEDs have a high switching speed. The LED can be switched off during the CCD charge transfer or the document transport. For efficient illumination the second end face 49 and the LED should be situated near one another. Between the LED and the second end face 49 there may be provided a diffuser, a light conductor or a light distributor (not shown). Optical contact via an optical liquid or glue is possible, but not necessary. Feasible embodiments in this respect are described in detail in the cited Netherlands Patent Application NL-8902295. A suitable result can be obtained, for example by means of an LED lamp in which the chip is encapsulated in a light-dispersive substance. Like the light source 9, for example the sensor 13 of the detection system 11 can be mounted substantially directly on the second end face 51. Optical contact can again be realised by means of an optical liquid. An advantage in this respect consists in that the liquid fills the irregularities in the end face 51 so that the fibre ends 31 are protected and the end face 51 need not be polished so as to be accurately flat. A further advantage of optical contact consists in that a single LED suffices for illumination of the document 3, because a high detection efficiency can thus be achieved. The mounting of a sensor, notably a CCD, in optical contact is known *per se* from the publication "Imagerie à bas niveau de lumière par CCD" by M. Lemonier et al. in "Toute l'ectronique", No. 478, November 1982, page 10. Another possibility consists in the use of a lens (not shown) for concentrating the light to be detected and emanating from the second end face 51 of the fibre bundle 19 onto the sensor 13.

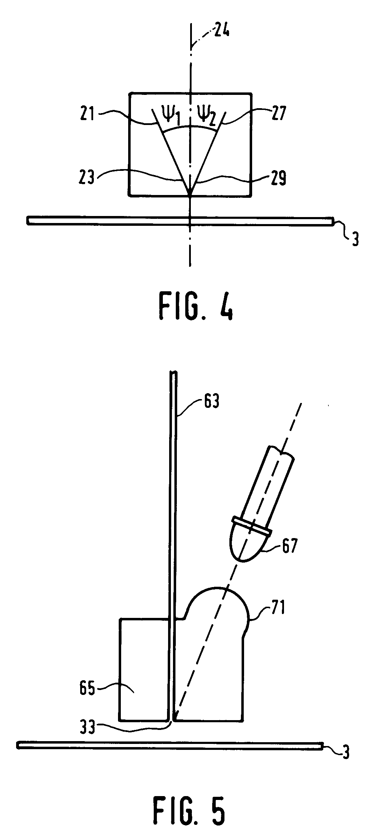

In the embodiments described herein the first end portions of the fibres 21, 27 extend perpendicularly to the document to be scanned. The fibre ends 23, 29 may also be inclined relative to the document 3; this is more efficient, but the construction and alignment are then more difficult from a technical point of view. Fig. 4 shows an embodiment in this respect. The fibre ends 23 extend at an angle $\psi_1$ with respect to the normal 24 to the document 3, the fibre ends 29 being positioned at an opposed but equal angle $\psi_2$ relative to the normal 24. The dashed circles 55 in Fig. 3b indicate the field on the document 3 which is covered by each fibre 21, 27. The effective field is the common field of vision 57 of a first fibre 17 and a second fibre 19 on the document 3, the document 3 being illuminated as well as read-out at that area. When the distance between the document 3 and the fibre ends 23, 29 is increased, on the one hand the effective field increases but on the other hand the illumination and read-out become less effective, so that an optimum distance can be determined. Moreover, when the distance becomes too great, the fields of the fibres of the read-out bundle will start to overlap, thus giving rise to crosstalk in an area 59 between two neighbouring fibres of the read-out bundle. Only a limited degree of crosstalk is tolerated, depending on the desired modulation transfer function (MTF).

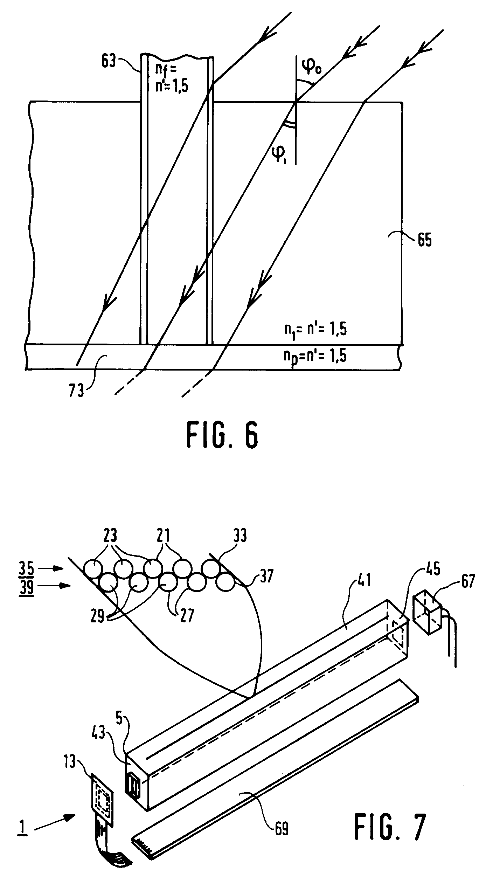

If a resolution is desired which is higher than the resolution which can be achieved by arranging the rows 35, 39 of the first fibre bundle 17 and the second fibre bundle 19 in a dense packing, for example a smaller fibre diameter can be chosen for the fibres of the read-out bundle; this is known *per se*. Another possibility consists in using the fibre bundle intended for illumination also, partly or completely, for the read-out, so that both bundles are used for the read-out. This can be realised, for example by guiding the light beam for illuminating the document 3 through a layer surrounding the cores of a number of fibres of one of the fibre bundles adapted for read-out. When the fibres are provided with a cladding, the cladding may form part of this layer. Such a method of illumination is known *per se* from DE-U 8906063. In the embodiments described therein, the fibres for read-out are rendered suitable for illumination by the provision of a disturbance zone in the cladding of these fibres. This interference zone may comprise, for example a notch or a grating in the coating. Another possibility consists in the provision of a transparent wire (partly in the optical fibres) extending transversely of the longitudinal direction of the fibres, or in the formation of a bend in the fibres, the outer bend being partly removed by grinding. Unless specific design and technological steps are taken, these embodiments, however, have the drawback that an amount of coupled-in light is guided directly to the detector, resulting in a high background in the signal. Moreover, the technological construction may give rise to problems, notably in the case of small fibre diameters. Furthermore, all solutions have the drawback that a part of the light to be detected escapes at the area where the light is coupled in. In the embodiment shown in Fig. 5, the light beam is coupled into the fibre 63 through a specific optical design. A practical embodiment is realised as follows. The fibre 63, provided with a coating or not, is encapsulated in a transparent material 65. This can be realised, for example by clamping the fibre 63 between two rods, at least one of which is opaque, preferably transparent. In that case the fibre 63 should be provided with a coating. It is also possible to encapsulate the fibre bundle in a transparent material. In that case the fact must be taken into account that light rays will not emerge through the transparent layer within the numerical aperture of the fibre 63 and that, because the beam path is reversible, externally coupled-in light will not be conducted by the fibre 63. Consequently, the light must be coupled in near the first end face 33 of the illumination bundle. The light should then be incident on the fibre 63 and on the end face 33 at such an angle that it can enter the fibre 63 and emerge from the end face 33 and that it will not be totally reflected. When the light emerges from the end face 33, Fresnel reflection occurs; this reflection can be minimized by ensuring that the reflected light is outside the numerical aperture of the fibre 63 as much as possible. This can be achieved by positioning the fibre 63 perpendicularly to the document 3 or inclined relative to the LED 67. The refractive indices of the cores and of the transparent material 65 are also of relevance in this respect. When the fibre 63 is provided with a coating, the refractive index of the transparent material 65 is less critical, because the coating then constitutes a barrier. The following arithmetical example offers a feasible geometry and will be illustrated with reference to Fig. 6. The end face of the fibre 63 is provided with a protective coating 73 having a refractive index $n_D$. The LED 67 is arranged at an angle $\phi_0$ relative to the fibre 63. According to Snellius' law,

$$\sin\phi_0 = n_1.\sin\phi_1,$$

where $\phi_1$ is the direction of the light beam in the medium having a refractive index $n_1$. Furthermore, the numerical aperture (NA) of the fibre 63 is given by:

$$NA = n_0.\sin\phi_f,$$

where $\phi_f$ is the acceptance angle and $n_0$ is the refractive index outside the fibre 63. The limit at which total reflection occurs is given by:

$$n_f.\sin\phi_g = 1$$

where $n_f$ is the refractive index of the fibre core and $\phi_g$ is the limit angle for total reflection on the fibre/air interface. When the same value n is chosen for all refractive indices:

$$\sin\phi_0 = n.\sin\phi_1$$
$$NA = n.\sin\phi_f$$
$$n.\sin\phi_g = 1$$

In order to ensure that on the one hand no reflection occurs within the numerical aperture, it must be ensured that:

$$\sin\phi_1 > \sin\phi_f$$

or

$$\sin\phi_1 > \frac{NA}{n}$$

Because on the other hand no total reflection should occur on the interface between the protective layer 73 on the end face of the fibre 63 and air, it must be ensured that:

$$\sin\phi_1 < \sin\phi_g$$

or

$$\sin\phi_1 < \frac{1}{n}$$

so that

$$\frac{NA}{n} < \sin\varphi_1 < \frac{1}{n}$$

For a fibre having a numerical aperture NA = 0.5 and a refractive index n = 1.5, this results in the condition:

$$19.5° < \phi_1 < 41.8°$$

An optimum choice is, for example $\phi_1 = 30°$ ($\phi_0 = 48°$) approximately halfway these two extreme values, because the LED emits a diverging beam. The embodiment shown in Fig. 5 relates to an array of optical fibres 63 where the light source 9 is an array of LEDs 67. The light is focused onto a fine extending perpendicularly to the plane of drawing on the document 3 by a cylindrical lens 71. The number of LEDs and the individual light distribution determine the ripple arising in the illumination strength below the fibre array. A suitable measure is a LED pitch based on approximately half the intensity of the bundle. When both fibre bundles 17, 19 in the Figs. 1 and 2 are used for read-out, the fibres 21, 27 of one of the bundles 17, 19 or of both bundles 17, 19 can be constructed as the fibres 63. The illumination of the document 3 is then realised via the layer around the fibres of, for example the first bundle 17. On each of the second end faces 49, 51 a sensor 13 can then be mounted in the described manner.

For sensors in the device 1 described herein preferably a CCD is chosen because of the high resolution of such sensors. Furthermore, when a CCD is used a large number of grey values can be achieved. A further advantage of the use of a CCD consists in that it can be provided with a colour matrix filter, so that documents containing colours can also be scanned so as to be stored or transmitted in electronic form. Such a CCD is known *per se* for use in colour video cameras. For the light source 9 use can be made of, for example a number of light-emitting diodes which emit light of different wavelengths. Illumination can also be realised by means of a single lamp, for example a halogen lamp in front of which there is arranged a blue filter, in combination or not with an LCD between the lamp and the fibre which acts as a light switch. Both possibilities are described in the cited Netherlands Patent Application NL-8902295. Another possibility for the sensor 13 consists in an optical RAM as is known from US-A 4,570,063 for such applications.

The electronic circuitry associated with the device 1 can be accommodated on a comparatively small printed circuit board (PCB) 69 as shown in Fig. 7, which board can be mounted over the scanning block 5 so that a compact unit is obtained.

The described device 1 can be used not only for facsimily apparatus, but also for image input for computer or copier apparatus, both in black and white and in colour.

## Claims

1. A device for the optical scanning of a document, comprising an elongate scanning block, at least one light source for illuminating the document, an optical detection system which includes at least one sensor, a first optical fibre bundle and a second optical fibre bundle, each fibre bundle comprising a number of optical fibres having a core, a first end and a second end, the first ends of the fibres in a respective fibre bundle being arranged in a first row in a first end face, their second ends being arranged in a second end face, the first end faces being coincident with a side face of the scanning block which is to face the document, the rows thus formed in the first end faces extending in the longitudinal direction of the scanning block, characterized in that the optical fibre bundles emerge from the scanning block *via* at least one end face of the scanning block.

2. A device as claimed in Claim 1, characterized in that the two rows of first fibre ends extend substantially parallel to one another.

3. A device as claimed in Claim 2, characterized in that the first fibre ends are arranged in a dense packing.

4. A device as claimed in Claim 1, 2 or 3, in which at least one of the fibre bundles is adapted to illuminate the document and at least one of the fibre bundles is adapted to read-out the document, characterized in that the first optical fibre bundle emerges from the scanning block *via* a first end face, the second optical fibre bundle emerging from the scanning block *via* a second end face.

**5.** A device as claimed in Claim 4, characterized in that the light source is mounted on the second end face of the fibre bundle intended for illumination.

**6.** A device as claimed in Claim 5, characterized in that the light source comprises a light-emitting diode.

**7.** A device as claimed in Claim 4, 5 or 6, characterized in that the sensor is mounted on and in optical contact with the second end face of the fibre bundle intended for read-out.

**8.** A device as claimed in Claim 4, characterized in that at least one of the fibre bundles is adapted to illuminate as well as to read out the document, the light beam from the light source for illumination being incident on the document through a transparent layer which encloses the cores of at least a part of the fibres of the relevant fibre bundle.

**9.** A device as claimed in Claim 8, characterized in that the incident light beam and the core of the fibre enclose an angle which is associated with the refractive indices of the core and the transparent material so that total reflection is absent at the area where the light beam enters the core and at the area where the light beam is incident on the document.

**10.** A device as claimed in Claim 9, characterized in that a cylindrical lens is arranged in the light path between the light source and the cores at the area where the light beam enters.

**11.** A device as claimed in Claim 8, 9 or 10, characterized in that the light source comprises a row of light-emitting diodes.

**12.** A device as claimed in Claim 8, 9, 10 or 11, characterized in that the sensor is mounted on and in optical contact with the second end faces of the fibre bundles intended for read-out.

**13.** A device as claimed in any one of the preceding Claims, characterized in that the sensor is a CCD.

FIG. 1

FIG. 2

EP 0 504 998 A2

FIG. 3a

FIG. 3b

FIG. 4

FIG. 5

EP 0 504 998 A2

FIG. 6

FIG. 7